# EUROPEAN PATENT APPLICATION

(11) **EP 4 641 719 A1**
(43) Date of publication of application: **29.10.2025**
(21) Application number: 24750362.6
(22) Date of filing: 31.01.2024
(51) Int. Cl.: H01M 8/1246, C25B 9/19, H01M 8/04, H01M 8/12, H01M 8/2475

(54) **SOLID ELECTROLYTE LAYER, ELECTROCHEMICAL CELL, ELECTROCHEMICAL CELL DEVICE, MODULE, AND MODULE STORAGE DEVICE**

(30) Priority: 31.01.2023 JP 2023013241
(71) Applicant: Kyocera Corporation, Kyoto-shi, Kyoto 612-8501 (JP)
(72) Inventor: MIYAZAKI, Kazunari, Kyoto-shi, Kyoto 612-8501 (JP)
(74) Representative: Viering, Jentschura & Partner mbB Patent- und Rechtsanwälte
(86) International application number: PCT/JP2024/003173
(87) International publication number: WO 2024/162413

(57) **Abstract**

A solid electrolyte layer (6) includes a first surface (6a) and a second surface (6b) facing each other in a thickness direction, and has a plurality of electrolytic particles (61) containing an oxide. The plurality of electrolytic particles (61) includes at least one first particle (61a) and a second particle (61b). The at least one first particle (61a) is in contact with both the first surface (6a) and the second surface (6b). The second particle (61b) is in contact with either one of the first surface (6a) and the second surface (6b) and is in no contact with the other.

## Description

### TECHNICAL FIELD

The present disclosure relates to a solid electrolyte layer, an electrochemical cell, an electrochemical cell device, a module, and a module housing device.

### BACKGROUND OF INVENTION

In recent years, various fuel cell stack devices each including a plurality of fuel cells have been proposed, as next-generation energy. A fuel cell is a type of cell capable of obtaining electrical power by using a fuel gas such as a hydrogen-containing gas and an oxygen-containing gas such as air.

### CITATION LIST

### PATENT LITERATURE

Patent Document 1: JP2017-147030 A

### SUMMARY

A solid electrolyte layer according to an aspect of the embodiment has a first surface and a second surface facing each other in a thickness direction, and has a plurality of electrolytic particles containing an oxide. The plurality of electrolytic particles includes at least one first particle and a second particle. The at least one first particle is in contact with both the first surface and the second surface. The second particle is in contact with either one of the first surface and the second surface and is in no contact with the other.

An electrochemical cell of the present disclosure includes the above-described solid electrolyte layer.

An electrochemical cell device of the present disclosure includes a cell stack including the electrochemical cell described above.

A module of the present disclosure includes the electrochemical cell device described above and a storage container housing the electrochemical cell device.

A module housing device of the present disclosure includes the module described above, an auxiliary device configured to operate the module, and an external case housing the module and the auxiliary device.

### BRIEF DESCRIPTION OF THE DRAWINGS

FIG. 1A is a horizontal cross-sectional view illustrating an example of an electrochemical cell according to a first embodiment.
FIG. 1B is a side view of an example of the electrochemical cell according to the first embodiment when viewed from a side of an air electrode.
FIG. 1C is a side view of an example of the electrochemical cell according to the first embodiment when viewed from a side of an interconnector.
FIG. 2A is a perspective view illustrating an example of an electrochemical cell device according to the first embodiment.
FIG. 2B is a cross-sectional view taken along a line X-X illustrated in FIG. 2A.
FIG. 2C is a top view illustrating an example of the electrochemical cell device according to the first embodiment.
FIG. 3 is an enlarged cross-sectional view of a region R1 indicated in FIG. 1A.
FIG. 4 is an exterior perspective view illustrating an example of a module according to the first embodiment.
FIG. 5 is an exploded perspective view schematically illustrating an example of a module housing device according to the first embodiment.
FIG. 6A is a cross-sectional view illustrating an example of an electrochemical cell device according to a second embodiment.
FIG. 6B is a horizontal cross-sectional view illustrating an electrochemical cell according to the second embodiment.
FIG. 7 is an enlarged cross-sectional view of a region R2 indicated in FIG. 6B.
FIG. 8 is a perspective view illustrating an example of an electrochemical cell according to a third embodiment.
FIG. 9 is a partial cross-sectional view of the electrochemical cell illustrated in FIG. 8.
FIG. 10 is an enlarged cross-sectional view of a region R3 indicated in FIG. 9.
FIG. 11A is a horizontal cross-sectional view illustrating an example of an electrochemical cell according to a fourth embodiment.
FIG. 11B is a horizontal cross-sectional view illustrating another example of the electrochemical cell according to the fourth embodiment.
FIG. 11C is a horizontal cross-sectional view illustrating another example of the electrochemical cell according to the fourth embodiment.
FIG. 12 is an enlarged cross-sectional view of a region R4 indicated in FIG. 11A.
FIG. 13 is a diagram illustrating evaluation results of Samples 1 to 5.
FIG. 14 is a diagram illustrating evaluation results of Samples 1 and 6 to 9.
FIG. 15 is a diagram illustrating evaluation results of Samples 1 and 10 to 13.

### DESCRIPTION OF EMBODIMENTS

The conventional fuel cell stack device mentioned above has room for improvement in increasing power generation performance.

It is desired to provide a solid electrolyte layer, an electrochemical cell, an electrochemical cell device, a module, and a module housing device, which can have improved performance.

Embodiments of a solid electrolyte layer, an electrochemical cell, an electrochemical cell device, a module, and a module housing device disclosed in the present application will now be described in detail with reference to the accompanying drawings. Note that the disclosure is not limited by the following embodiments.

Note that the drawings are schematic and that the dimensional relationships between elements, the proportions of the elements, and the like may differ from the actual ones. There may be differences between the drawings in the dimensional relationships, proportions, and the like.

### First Embodiment

### Configuration of Electrochemical Cell

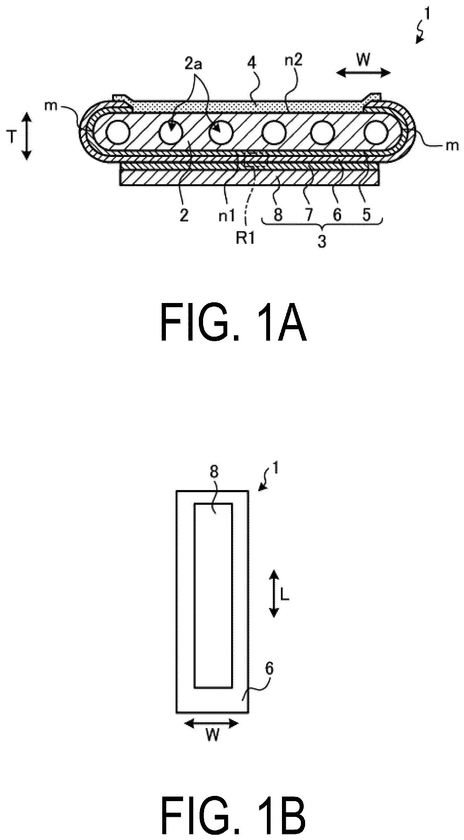

First, with reference to FIGs. 1A to 1C, an example of a solid oxide fuel cell will be described as an electrochemical cell according to a first embodiment. The electrochemical cell device may include a cell stack including a plurality of the electrochemical cells. The electrochemical cell device including the plurality of electrochemical cells is simply referred to as a cell stack device.

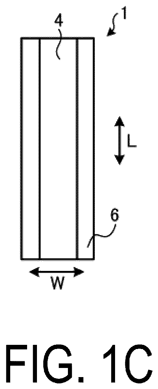

FIG. 1A is a horizontal cross-sectional view illustrating an example of an electrochemical cell according to a first embodiment. FIG. 1B is a side view of an example of the electrochemical cell according to the first embodiment when viewed from a side of an air electrode. FIG. 1C is a side view of an example of the electrochemical cell according to the first embodiment when viewed from a side of an interconnector. Note that FIGs. 1A to 1C illustrate enlarged views each illustrating part of a configuration of the electrochemical cell. Hereinafter, the electrochemical cell may be simply referred to as a cell.

In the example illustrated in FIGs. 1A to 1C, a cell 1 is of a hollow flat plate type, and has an elongated plate shape. As illustrated in FIG. 1B, the overall shape of the cell 1 when viewed from the side may be, for example, a rectangle having a side length of from 5 cm to 50 cm in a length direction L and a length of from 1 cm to 10 cm in a width direction W orthogonal to the length direction L. The thickness in a thickness direction T of the entire cell 1 may be, for example, from 1 mm to 5 mm.

As illustrated in FIG. 1A, the cell 1 includes a support substrate 2 with electrical conductivity, an element portion 3, and an interconnector 4. The support substrate 2 has a pillar shape having surfaces n1 and n2, which are a pair of opposing flat surfaces, and a pair of arc-shaped side surfaces m connecting the surfaces n1 and n2.

The element portion 3 is located on the surface n1 of the support substrate 2. The element portion 3 such as that described above includes a fuel electrode 5, a solid electrolyte layer 6, an intermediate layer 7, and an air electrode 8.

As illustrated in FIG. 1B, the air electrode 8 does not extend to the lower end of the cell 1. At the lower end portion of the cell 1, only the solid electrolyte layer 6 is exposed on a surface of the surface n1. As illustrated in FIG. 1C, the interconnector 4 may extend to the lower end of the cell 1. At the lower end portion of the cell 1, the interconnector 4 and the solid electrolyte layer 6 are exposed on the surface. Note that, as illustrated in FIG. 1A, the solid electrolyte layer 6 is exposed at the surface at the pair of side surfaces m in a circular arc shape of the cell 1. The interconnector 4 need not extend to the lower end of the cell 1.

Hereinafter, each of members constituting the cell 1 will be described.

The support substrate 2 includes gas-flow passages 2a, inside which gas flows. The example of the support substrate 2 illustrated in FIG. 1A includes six gas-flow passages 2a. The support substrate 2 has gas permeability and allows the fuel gas flowing through the gas-flow passages 2a to pass through to the fuel electrode 5. The support substrate 2 may have electrical conductivity. The support substrate 2 having electrical conductivity collects electricity generated in the element portion 3 to the interconnector 4.

The material of the support substrate 2 includes, for example, an iron group metal component and an inorganic oxide. For example, the iron group metal component may be Ni (nickel) and/or NiO. The inorganic oxide may be, for example, a specific rare earth element oxide. The rare earth element oxide may contain, for example, one or more rare earth elements selected from Sc, Y, La, Nd, Sm, Gd, Dy, and Yb.

As the material of the fuel electrode 5, a commonly known material may be used. As the fuel electrode 5, any of porous electrically conductive ceramics, for example, ceramics containing ZrO₂ in which a calcium oxide, a magnesium oxide, or a rare earth element oxide is in solid solution, and Ni and/or NiO may be used. This rare earth element oxide may contain a plurality of rare earth elements selected from, for example, Sc, Y, La, Nd, Sm, Gd, Dy, and Yb. Hereinafter, ZrO₂ in which a calcium oxide, a magnesium oxide, or a rare earth element oxide is in solid solution may be referred to as stabilized zirconia. Stabilized zirconia may also include partially stabilized zirconia.

The solid electrolyte layer 6 is an electrolyte and delivers ions between the fuel electrode 5 and the air electrode 8. At the same time, the solid electrolyte layer 6 has gas blocking properties, and makes leakage of the fuel gas and the oxygen-containing gas less likely to occur.

The material of the solid electrolyte layer 6 may be, for example, ZrO₂ in which from 3 mole% to 15 mole% of a rare earth element oxide is in solid solution. The rare earth element oxide may contain, for example, one or more rare earth elements selected from Sc, Y, La, Nd, Sm, Gd, Dy, and Yb. The solid electrolyte layer 6 may include, for example, ZrO₂ in which Yb, Sc, or Gd forms a solid solution, or may include BaZrO₃ in which Sc, Y, or Yb forms a solid solution. Details of the solid electrolyte layer 6 will be described below.

The intermediate layer 7 functions as a diffusion prevention layer. The intermediate layer 7 makes strontium (Sr) contained in the air electrode 8, which will be described later, less likely to diffuse into the solid electrolyte layer 6, thereby making a resistive layer of SrZrO₃ less likely to be formed on the solid electrolyte layer 6.

The material of the intermediate layer 7 is not particularly limited thereto as long as the material is not likely to cause the diffusion of elements between the air electrode 8 and the solid electrolyte layer 6 in general. The material of the intermediate layer 7 may contain, for example, CeO₂ (cerium oxide) in which rare earth elements other than Ce (cerium) are in solid solution. As such rare earth elements, Gd (gadolinium), Sm (samarium), or the like may be used.

The air electrode 8 has gas permeability. The open porosity of the air electrode 8 may be, for example, 20% or more, and particularly may be in a range from 30% to 50%.

The material of the air electrode 8 is not particularly limited, as long as the material is one generally used for the air electrode. The material of the air electrode 8 may be, for example, an electrically conductive ceramic such as a so-called ABO₃ type perovskite oxide.

The material of the air electrode 8 may be, for example, a composite oxide in which Sr (strontium) and La (lanthanum) coexist at the A site. Examples of such a composite oxide include La_{y}Sr₁₋ₓCo_{y}Fe_{1-y}O₃, LaₓSr₁₋ₓMnO₃, LaₓSr₁₋ₓFeO₃, and LaₓSr₁₋ₓCoO₃. Here, x is 0 < x < 1, and y is 0 < y < 1.

The interconnector 4 is dense and makes the leakage of the fuel gas flowing through the gas-flow passages 2a located inside the support substrate 2, and of the oxygen-containing gas flowing outside the support substrate 2 less likely to occur. The interconnector 4 may have a relative density of 93% or more; particularly 95% or more.

As the material of the interconnector 4, a lanthanum chromite-based perovskite oxide (LaCrO₃-based oxide), a lanthanum strontium titanium-based perovskite oxide (LaSrTiO₃-based oxide), or the like may be used. These materials have electrical conductivity, and are unlikely to be reduced and also unlikely to be oxidized even when brought into contact with a fuel gas such as a hydrogen-containing gas and an oxygen-containing gas such as air.

### Configuration of Electrochemical Cell Device

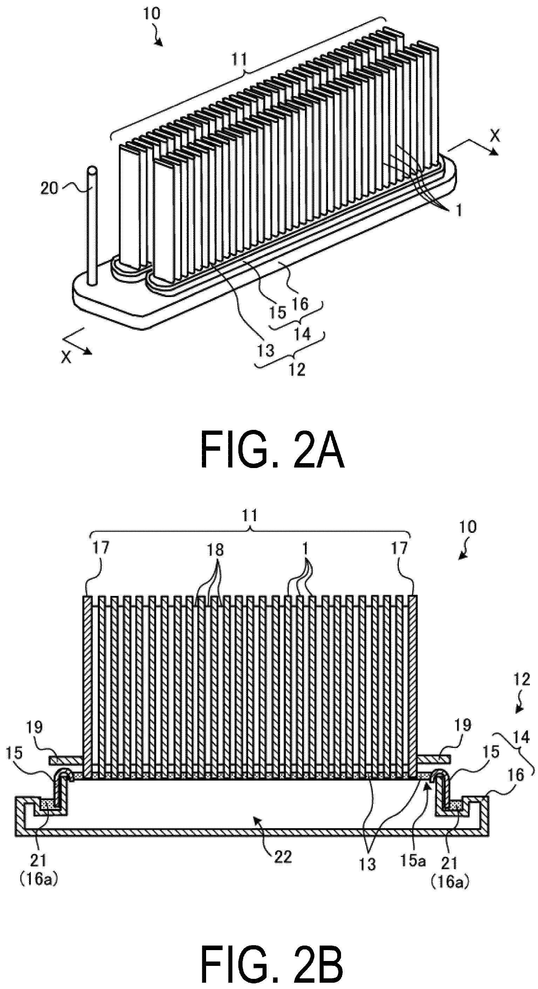

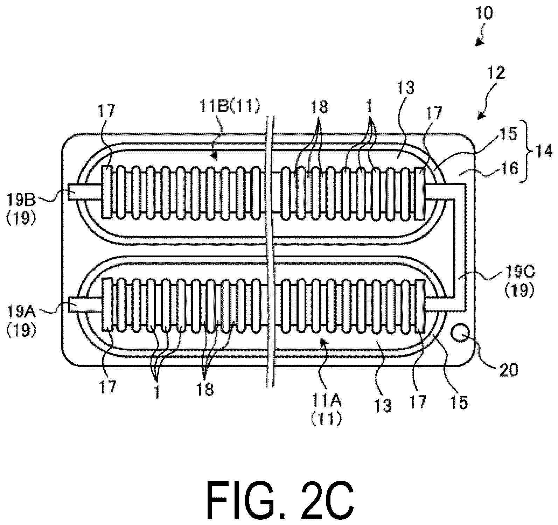

An electrochemical cell device according to the present embodiment using the cell 1 described above will be described with reference to FIGs. 2A to 2C. FIG. 2A is a perspective view illustrating an example of an electrochemical cell device according to the first embodiment. FIG. 2B is a cross-sectional view taken along a line X-X illustrated in FIG. 2A. FIG. 2C is a top view illustrating an example of the electrochemical cell device according to the first embodiment.

As illustrated in FIG. 2A, a cell stack device 10 includes a cell stack 11 including a plurality of the cells 1 arrayed (stacked) in the thickness direction T (see FIG. 1A) of each cell 1, and a fixing member 12.

The fixing member 12 includes a fixing material 13 and a support member 14. The support member 14 supports the cells 1. The fixing material 13 fixes the cells 1 to the support member 14. The support member 14 includes a support body 15 and a gas tank 16. The support body 15 and the gas tank 16, which constitute the support member 14, are made of metal.

As illustrated in FIG. 2B, the support body 15 includes an insertion hole 15a, into which the lower end portions of the plurality of cells 1 are inserted. The lower end portions of the plurality of cells 1 and the inner wall of the insertion hole 15a are bonded by the fixing material 13.

The gas tank 16 includes an opening portion through which a reactive gas is supplied to the plurality of cells 1 via the insertion hole 15a, and a recessed groove 16a located in the periphery of the opening portion. The outer peripheral end portion of the support body 15 is bonded to the gas tank 16 by a bonding material 21, with which the recessed groove 16a of the gas tank 16 is filled.

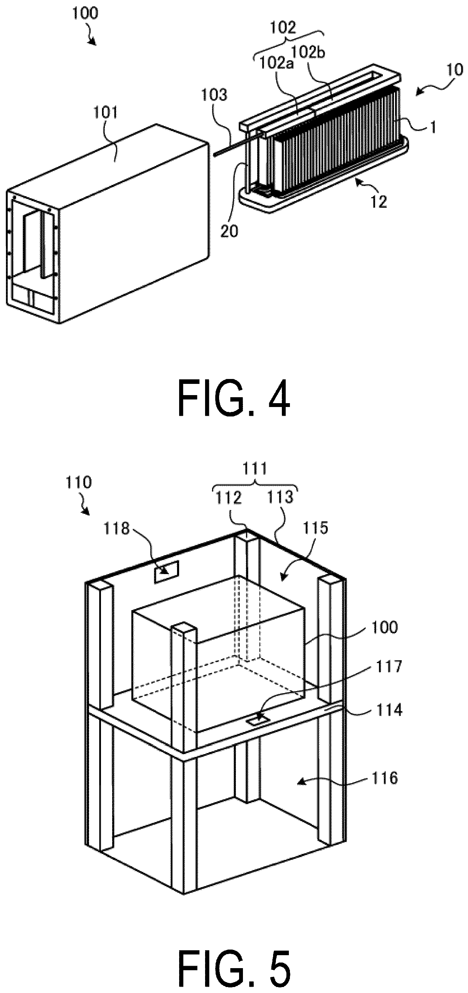

In the example illustrated in FIG. 2A, the fuel gas is stored in an internal space 22 formed by the support body 15 and the gas tank 16. The support body 15 and the gas tank 16 constitute the support member 14. The gas tank 16 includes a gas circulation pipe 20 connected thereto. The fuel gas is supplied to the gas tank 16 through the gas circulation pipe 20 and is supplied from the gas tank 16 to the gas-flow passages 2a (see FIG. 1A) inside the cells 1. The fuel gas to be supplied to the gas tank 16 is produced in a reformer 102 (see FIG. 4) which will be described later.

A hydrogen-rich fuel gas can be produced, for example, by steam-reforming a raw fuel. When the fuel gas is produced by steam reforming, the fuel gas contains steam.

In the example illustrated in FIG. 2A, two rows of the cell stacks 11, two support bodies 15, and the gas tank 16 are provided. Each of the two rows of the cell stacks 11 includes the plurality of cells 1. Each of the cell stacks 11 is fixed to a corresponding one of the support bodies 15. An upper surface of the gas tank 16 includes two through holes. Each of the support bodies 15 is disposed in a corresponding one of the through holes. The internal space 22 is formed by the one gas tank 16 and the two support bodies 15.

The insertion hole 15a has, for example, an oval shape in a top surface view. The length of the insertion hole 15a in an arrangement direction of the cells 1, that is, the thickness direction T, is longer than the distance between two end current collection members 17 located at two ends of the cell stack 11, for example. The width of the insertion hole 15a is, for example, greater than the length of the cell 1 in the width direction W (see FIG. 1A).

As illustrated in FIG. 2B, the joined portions between the inner wall of the insertion hole 15a and the lower end portions of the cells 1 are filled with the fixing material 13 and solidified. As a result, the inner wall of the insertion hole 15a and the lower end portions of the plurality of cells 1 are bonded and fixed, and the lower end portions of the cells 1 are bonded and fixed to each other. The gas-flow passages 2a of each of the cells 1 communicate, at the lower end portion, with the internal space 22 of the support member 14.

The fixing material 13 and the bonding material 21 may be of low electrical conductivity, such as glass. As the specific materials of the fixing material 13 and the bonding material 21, amorphous glass or the like may be used, and especially, crystallized glass or the like may be used.

As the crystallized glass, for example, any one selected from the group consisting of SiO₂-CaO-based, MgO-B₂O₃-based, La₂O₃-B₂O₃-MgO-based, La₂O₃-B₂O₃-ZnO-based, and SiO₂-CaO-ZnO-based materials may be used, or, in particular, a SiO₂-MgO-based material may be used.

As illustrated in FIG. 2B, a connecting member 18 is interposed between adjacent cells 1 of the plurality of cells 1. Each of the connecting members 18 electrically connects in series the fuel electrode 5 of one of the adjacent ones of the cells 1 with the air electrode 8 of the other one of the adjacent ones of the cells 1. More specifically, each of the connecting members 18 connects the interconnector 4 electrically connected to the fuel electrode 5 of the one of the adjacent ones of the cells 1 and the air electrode 8 of the other one of the adjacent ones of the cells 1.

As illustrated in FIG. 2B, the end current collection members 17 are electrically connected to the cells 1 located at the outermost sides in the arrangement direction of the plurality of cells 1. The end current collection members 17 are each connected to an electrically conductive portion 19 protruding outward from the cell stack 11. The electrically conductive portion 19 collects electricity generated by the cells 1 and conducts the electricity to the outside. Note that in FIG. 2A, the end current collection members 17 are not illustrated.

As illustrated in FIG. 2C, the cell stack device 10 may be a single battery in which two cell stacks 11A and 11B are connected in series. In such a case, the electrically conductive portion 19 of the cell stack device 10 is divided into a positive electrode terminal 19A, a negative electrode terminal 19B, and a connection terminal 19C.

The positive electrode terminal 19A functions as a positive electrode when the electrical power generated by the cell stack 11 is output to the outside and is electrically connected to the end current collection member 17 on a positive electrode side in the cell stack 11A. The negative electrode terminal 19B functions as a negative electrode when the electrical power generated by the cell stack 11 is output to the outside and is electrically connected to the end current collection member 17 on a negative electrode side in the cell stack 11B.

The connection terminal 19C electrically connects the end current collection member 17 on the negative electrode side in the cell stack 11A and the end current collection member 17 on the positive electrode side in the cell stack 11B.

### Details of Solid electrolyte layer

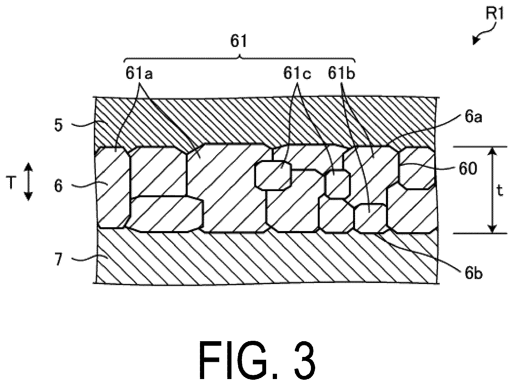

Next, the solid electrolyte layer according to the first embodiment will be described in detail with reference to FIG. 3. FIG. 3 is an enlarged cross-sectional view of the region R1 indicated in FIG. 1A.

As illustrated in FIG. 3, the solid electrolyte layer 6 has a first surface 6a and a second surface 6b opposed to each other in the thickness direction T. The first surface 6a is in contact with the fuel electrode 5. The second surface 6b is in contact with the intermediate layer 7.

The solid electrolyte layer 6 includes a plurality of electrolytic particles 61. Each of the plurality of electrolytic particles 61 includes an oxide. The adjacent electrolytic particles 61 are partitioned by a grain boundary 60.

The plurality of electrolytic particles 61 include a first particle 61a and a second particle 61b. The first particle 61a is the electrolytic particle 61 in contact with both the first surface 6a and the second surface 6b. The second particles 61b is the electrolytic particle 61 in contact with either one of the first surface 6a and the second surface 6b, and is in no contact with the other.

When the solid electrolyte layer 6 includes the first particle 61a, for example, the ion conductivity in the thickness direction T of the solid electrolyte layer 6 is improved. Since the solid electrolyte layer 6 includes the second particle 61b, for example, stresses generated inside the solid electrolyte layer 6 are alleviated, and durability is improved. Therefore, according to the solid electrolyte layer 6 of the present embodiment, the performance of the cell 1 is improved.

The plurality of electrolytic particles 61 may further include a third particle 61c located away from both the first surface 6a and the second surface 6b. This further improves the performance of the cell 1.

The area ratio of the first particle 61a in the cross section illustrated in FIG. 3, that is, the cross section of the solid electrolyte layer 6 intersecting with the first surface 6a and the second surface 6b may be 4% or more and 70% or less. When the area ratio of the first particle 61a is 4% or more, the ion conductivity in the thickness direction T of the solid electrolyte layer 6 is improved. When the area ratio of the first particle 61a is 70% or less, the solid electrolyte layer 6 appropriately includes the second particle 61b and the third particle 61c, and thus stresses generated inside the solid electrolyte layer 6 are alleviated and the durability is improved.

In the cross section illustrated in FIG. 3, the solid electrolyte layer 6 may include the first particle 61a having a diameter (circle equivalent diameters) larger than an average thickness t of the solid electrolyte layer 6. Thus, the ion conductivity in the thickness direction T of the solid electrolyte layer 6 is improved over a wide range.

In the cross section illustrated in FIG. 3, the solid electrolyte layer 6 may include the first particle 61a having a diameter (circle equivalent diameters) smaller than the average thickness t of the solid electrolyte layer 6. As a result, the porosity of the solid electrolyte layer 6 is reduced, the movement of ions inside the solid electrolyte layer 6 is less likely to be hindered by the pores, and the ion conductivity is improved.

In the cross section illustrated in FIG. 3, solid electrolyte layer 6 may include one or more, in particular, one or more and five or less first particles 61a within a length range corresponding to the average thickness t of the solid electrolyte layer 6 on the first surface 6a or the second surface 6b. This facilitates smooth movement of ions between the first surface 6a and the second surface 6b of the solid electrolyte layer 6.

The solid electrolyte layer 6 may include the first particles 61a at a number ratio of 2% or more and 50% or less of the plurality of electrolytic particles 61. As a result, the ion conductivity in the thickness direction T of the solid electrolyte layer 6 is improved, and the stress generated inside the solid electrolyte layer 6 is relaxed, so that the durability is improved.

The solid electrolyte layer 6 may have, on average, 1.3 or more and 5 or less electrolytic particles 61 between the first surface 6a and the second surface 6b. Thus, the stress generated inside the solid electrolyte layer 6 is relaxed, and the durability is improved.

Here, the arrangement, diameters, and the like of the electrolytic particles 61 in the solid electrolyte layer 6 can be obtained by, for example, measure of a cross section of the element portion 3 using a scanning type electron microscope (SEM) and an energy dispersive X-ray analyzer (EDX). Specifically, a cross-section of the solid electrolyte layer 6 is photographed by SEM, for example, at a magnification of 2000 times, and the obtained cross-sectional photograph is subjected to image analysis to calculate the diameters of 200 or more electrolytic particles 61. The diameter of the electrolytic particle 61 is a value obtained by measuring the circumferential length of the electrolytic particle 61 using, for example, image analysis software and converting the circumferential length into an equivalent circle diameter. The area ratio, the number ratio, and the like of the first particle 61a can be confirmed by image analysis of a cross-sectional photograph.

The number of first particles 61a included in a square having a side equal to the average thickness of the solid electrolyte layer 6 can be calculated, for example, as follows. First, the average thickness of the solid electrolyte layer 6 is calculated using a cross-sectional photograph of the solid electrolyte layer 6. Next, a square having sides corresponding to the calculated average thickness of the solid electrolyte layer 6 is superimposed on the cross-sectional photograph of the solid electrolyte layer 6 such that the center of the square is superimposed on a bisecting line that bisects the cross-section of the solid electrolyte layer 6 in the thickness direction and such that two opposing sides of the square extend along the first surface 6a and the second surface 6b, respectively. At this time, the first particle 61a overlapping with the square is counted.

The number of electrolytic particles 61 located between the first surface 6a and the second surface 6b is obtained by counting the number of electrolytic particles 61 located on a thickness-direction line segment in contact with the first surface 6a and the second surface 6b in a cross-sectional photograph of the solid electrolyte layer 6 at, for example, 10 or more locations and calculating the average thereof.

### Module

A module according to an embodiment of the present disclosure using the electrochemical cell device described above will be described with reference to FIG. 4. FIG. 4 is an exterior perspective view illustrating a module according to the first embodiment. FIG. 4 illustrates a state in which the front and rear surfaces, which constitute part of a storage container 101, are removed, and the cell stack device 10 of the fuel cell stored inside is taken out rearward.

As illustrated in FIG. 4, the module 100 includes the storage container 101, and the cell stack device 10 housed in the storage container. The reformer 102 is disposed above the cell stack device 10.

The reformer 102 generates a fuel gas by reforming a raw fuel such as natural gas and kerosene and supplies the fuel gas to the cell 1. The raw fuel is supplied to the reformer 102 through a raw fuel supply pipe 103. Note that the reformer 102 may include a vaporizing unit 102a for vaporizing water and a reforming unit 102b. The reforming unit 102b includes a reforming catalyst (not illustrated) for reforming the raw fuel into a fuel gas. The reformer 102 such as that described above can perform steam reforming, which is a highly efficient reformation reaction.

The fuel gas generated by the reformer 102 is supplied to the gas-flow passages 2a (see FIG. 1A) of the cell 1 through the gas circulation pipe 20, the gas tank 16, and the support member 14.

In the module 100 having the configuration mentioned above, the temperature in the module 100 during normal power generation is about from 500°C to 1000°C due to combustion of gas and power generation by the cell 1.

As described above, such a module 100 is configured to house the cell stack device 10 having the cell 1, whose performance is improved, so that the performance of the module 100 can be improved.

### Module Housing Device

FIG. 5 is an exploded perspective view illustrating an example of a module housing device according to the first embodiment. A module housing device 110 according to the present embodiment includes an external case 111, the module 100 illustrated in FIG. 4, and an auxiliary device (not illustrated). The auxiliary device operates the module 100. The module 100 and the auxiliary device are housed in the external case 111. Note that part of the configuration is not illustrated in FIG. 5.

The external case 111 of the module housing device 110 illustrated in FIG. 5 includes a support 112 and an external plate 113. A dividing plate 114 vertically partitions the interior of the external case 111. The space above the dividing plate 114 in the external case 111 is a module housing chamber 115 for housing the module 100. The space below the dividing plate 114 in the external case 111 is an auxiliary device housing chamber 116 for housing the auxiliary device configured to operate the module 100. Note that, in FIG. 5, the auxiliary device housed in the auxiliary device housing room 116 is not illustrated.

The dividing plate 114 includes an air circulation hole 117 for causing air in the auxiliary device housing chamber 116 to flow into the module housing chamber 115 side. The external plate 113 constituting the module housing chamber 115 includes an exhaust hole 118 for discharging air inside the module housing chamber 115.

In such a module housing device 110, as described above, the module 100 with the improved performance is provided in the module housing chamber 115. This configuration makes it possible to provide the module housing device 110 with the improved performance.

Note that, in the embodiment described above, the case where the support substrate of the hollow flat plate-shaped is used has been exemplified; however, the embodiment can also be applied to a cell stack device using a cylindrical support substrate.

### Second Embodiment

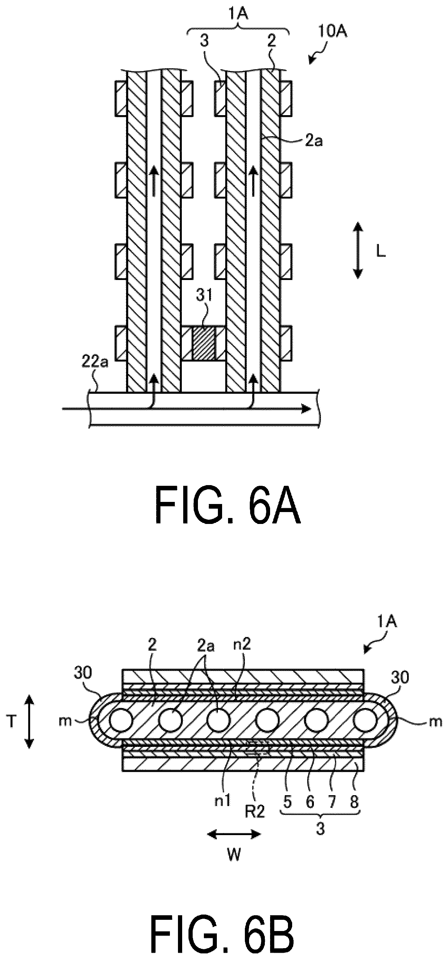

Next, an electrochemical cell and an electrochemical cell device according to a second embodiment will be described with reference to FIGs. 6A to 7.

In the embodiment described above, a so-called "vertically striped type" cell stack device, in which only one element portion including a fuel electrode, a solid electrolyte layer, and an air electrode is provided on the surface of the support substrate, is exemplified. However, the present disclosure can be applied to a horizontally striped type electrochemical cell device with an array of so-called "horizontally striped type" electrochemical cells, in which a plurality of element portions are provided on the surface of a support substrate at mutually separated locations and adjacent element portions are electrically connected to each other.

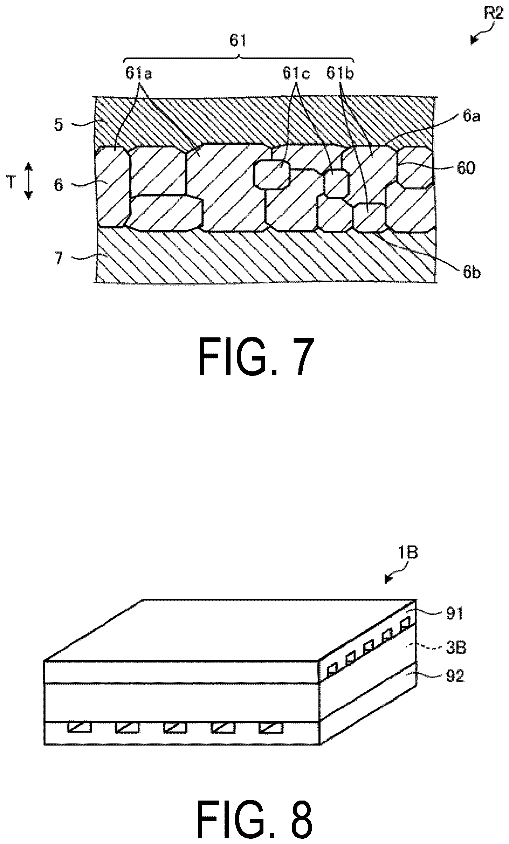

FIG. 6A is a cross-sectional view illustrating an example of an electrochemical cell device according to a second embodiment. FIG. 6B is a horizontal cross-sectional view illustrating an electrochemical cell according to a second embodiment. FIG. 7 is an enlarged view of a region R2 illustrated in FIG. 6B.

As illustrated in FIG. 6A, a cell stack device 10A includes a plurality of cells 1A extending in the length direction L from a pipe 22a that distributes a fuel gas. The cell 1A includes a plurality of the element portions 3 on the support substrate 2. A gas-flow passage 2a, through which a fuel gas from the pipe 22a flows, is provided inside the support substrate 2.

The cells 1A are electrically connected to each other via connecting members 31. Each of the connecting members 31 is located between the element portions 3 each included in a corresponding one of the cells 1A and electrically connects adjacent ones of the cells 1A to each other.

As illustrated in FIG. 6B, the cell 1A according to the second embodiment includes the support substrate 2, a pair of the element portions 3, and a sealing portion 30. The support substrate 2 has a pillar shape having surfaces n1 and n2, which are a pair of opposing flat surfaces, and a pair of arc-shaped side surfaces m connecting the surfaces n1 and n2.

The pair of element portions 3 are located on the surfaces n1 and n2 of the support substrate 2 so as to face each other. The sealing portion 30 is located to cover the side surface m of the support substrate 2.

As illustrated in FIG. 7, the solid electrolyte layer 6 has the first surface 6a and the second surface 6b opposed to each other in the thickness direction T. The first surface 6a is in contact with the fuel electrode 5. The second surface 6b is in contact with the intermediate layer 7.

The solid electrolyte layer 6 includes a plurality of electrolytic particles 61. Each of the plurality of electrolytic particles 61 includes an oxide. The adjacent electrolytic particles 61 are partitioned by a grain boundary 60.

The plurality of electrolytic particles 61 include a first particle 61a and a second particle 61b. The first particle 61a is the electrolytic particle 61 in contact with both the first surface 6a and the second surface 6b. The second particles 61b is the electrolytic particle 61 in contact with either one of the first surface 6a and the second surface 6b, and is in no contact with the other.

When the solid electrolyte layer 6 includes the first particle 61a, for example, the ion conductivity in the thickness direction T of the solid electrolyte layer 6 is improved. Since the solid electrolyte layer 6 includes the second particle 61b, for example, stresses generated inside the solid electrolyte layer 6 are alleviated, and durability is improved. Therefore, according to the solid electrolyte layer 6 of the present embodiment, the performance of the cell 1A is improved.

### Third Embodiment

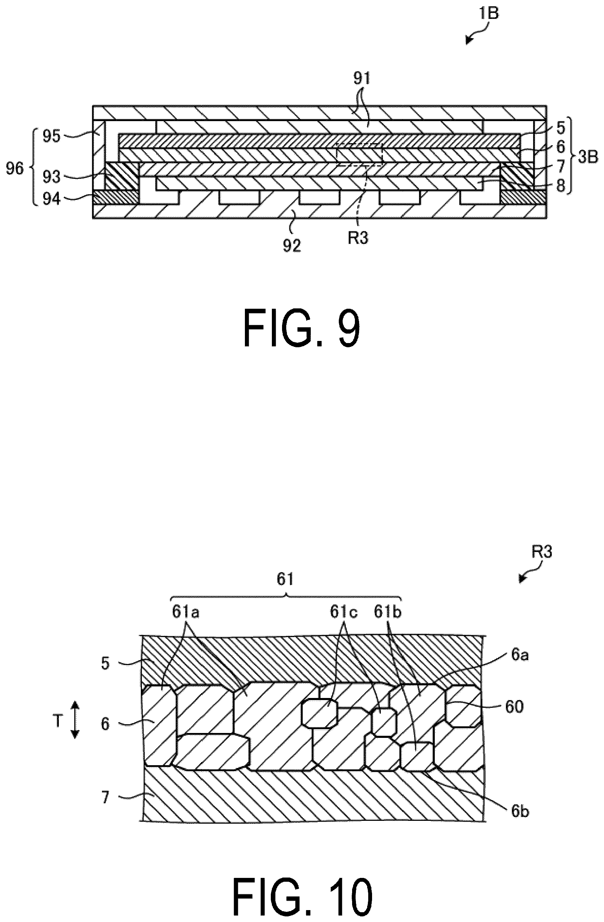

FIG. 8A is a perspective view illustrating an example of an electrochemical cell according to a third embodiment. FIG. 9 is a partial cross-sectional view of the electrochemical cell illustrated in FIG. 8.

As illustrated in FIGs. 8 and 9, a cell 1B includes an element portion 3B in which the fuel electrode 5, the solid electrolyte layer 6, the intermediate layer 7, and the air electrode 8 are layered, and conductive members 91, 92. In an electrochemical cell device in which a plurality of flat plate cells are stacked, for example, a plurality of cells 1B are electrically connected by electrically conductive members 91 and 92, which are metal layers adjacent to each other. The electrically conductive members 91 and 92 electrically connect adjacent ones of the cells 1B to each other, and each include gas-flow passages for supplying gas to the fuel electrode 5 or the air electrode 8.

As illustrated in FIG. 9, the cell 1B includes a sealing material for hermetically sealing the flow passage of a fuel gas and the flow passage of an oxygen-containing gas in the flat plate cell stack. The sealing material is a fixing member 96 of the cell, and includes a bonding material 93, and support members 94 and 95, which constitute a frame. The bonding material 93 may be a glass or may be a metal material such as silver solder.

The support member 94 may be a so-called separator that separates the flow passage of the fuel gas and the flow passage of the oxygen-containing gas. The material of the support members 94 and 95 may be, for example, an electrically conductive metal, or may be an insulating ceramic. When the support member 94 is a metal, the support member 94 may be formed integrally with the electrically conductive member 92. When the support member 95 is a metal member, the support member 95 may be formed integrally with the electrically conductive member 91.

One of the bonding material 93 and the support members 94 and 95 has insulating properties and causes the two electrically conductive members 91 and 92 sandwiching the flat plate cell to be electrically insulated from each other.

FIG. 10 is an enlarged cross-sectional view of a region R3 illustrated in FIG. 9. As illustrated in FIG. 10, the solid electrolyte layer 6 has the first surface 6a and the second surface 6b opposed to each other in the thickness direction T. The first surface 6a is in contact with the fuel electrode 5. The second surface 6b is in contact with the intermediate layer 7.

The solid electrolyte layer 6 includes a plurality of electrolytic particles 61. Each of the plurality of electrolytic particles 61 includes an oxide. The adjacent electrolytic particles 61 are partitioned by a grain boundary 60.

The plurality of electrolytic particles 61 include a first particle 61a and a second particle 61b. The first particle 61a is the electrolytic particle 61 in contact with both the first surface 6a and the second surface 6b. The second particles 61b is the electrolytic particle 61 in contact with either one of the first surface 6a and the second surface 6b, and is in no contact with the other.

When the solid electrolyte layer 6 includes the first particle 61a, for example, the ion conductivity in the thickness direction T of the solid electrolyte layer 6 is improved. Since the solid electrolyte layer 6 includes the second particle 61b, for example, stresses generated inside the solid electrolyte layer 6 are alleviated, and durability is improved. Therefore, according to the solid electrolyte layer 6 of the present embodiment, the performance of the cell 1B is improved.

### Fourth Embodiment

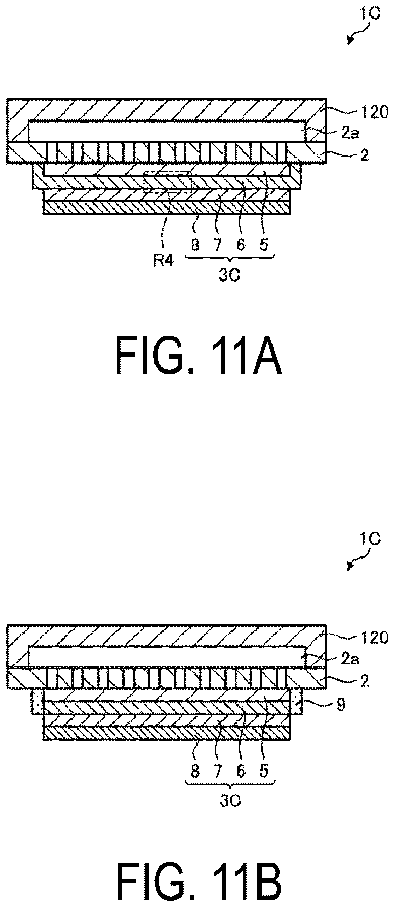

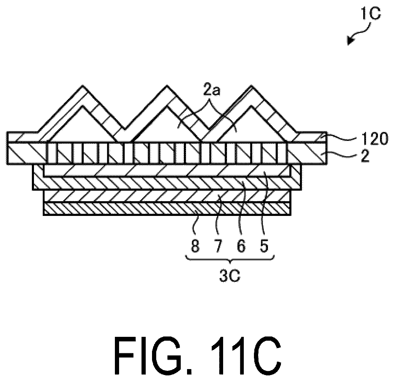

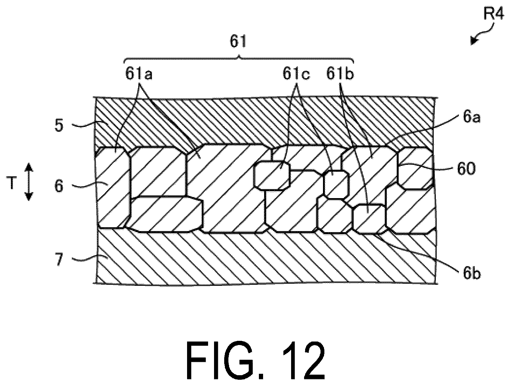

FIG. 11A is a horizontal cross-sectional view illustrating an example of an electrochemical cell according to a fourth embodiment. FIG. 11B and FIG. 11C are horizontal cross-sectional views illustrating other examples of the electrochemical cell according to the fourth embodiment. FIG. 12 is an enlarged view of the region R4 illustrated in FIG. 11A. Note that FIG. 12 can also be applied to the examples of FIG. 11B and FIG. 11C.

As illustrated in FIGs. 11A to 11C, a cell 1C includes an element portion 3C in which the fuel electrode 5, the solid electrolyte layer 6, the intermediate layer 7, and the air electrode 8 are layered, and the support substrate 2. The support substrate 2 includes through holes or fine holes at a site in contact with the element portion 3C, and includes a member 120 located outside a gas-flow passage 2a. The support substrate 2 allows gas to flow between the gas-flow passage 2a and the element portion 3C. The support substrate 2 may be made of, for example, one or more metal plates. A material of the metal plate may contain chromium. The metal plate may include an electrically conductive coating layer. The support substrate 2 electrically connects adjacent ones of the cells 1C to each other. The element portion 3C may be directly formed on the support substrate 2 or may be bonded to the support substrate 2 by a bonding material.

In the example illustrated in FIG. 11A, the side surface of the fuel electrode 5 is covered with the solid electrolyte layer 6 to hermetically seal the gas-flow passage 2a through which the fuel gas flows. As illustrated in 11B of the drawing, the side surface of the fuel electrode 5 may be covered and sealed with a sealing material 9 of dense glass or ceramic. The sealing material 9 covering the side surface of the fuel electrode 5 may have electrical insulation properties.

The gas-flow passage 2a of the support substrate 2 may be made of the member 120 having unevenness as illustrated in FIG. 11C.

As illustrated in FIG. 12, the solid electrolyte layer 6 has the first surface 6a and the second surface 6b opposed to each other in the thickness direction T. The first surface 6a is in contact with the fuel electrode 5. The second surface 6b is in contact with the intermediate layer 7.

The solid electrolyte layer 6 includes a plurality of electrolytic particles 61. Each of the plurality of electrolytic particles 61 includes an oxide. The adjacent electrolytic particles 61 are partitioned by a grain boundary 60.

The plurality of electrolytic particles 61 include a first particle 61a and a second particle 61b. The first particle 61a is the electrolytic particle 61 in contact with both the first surface 6a and the second surface 6b. The second particles 61b is the electrolytic particle 61 in contact with either one of the first surface 6a and the second surface 6b, and is in no contact with the other.

When the solid electrolyte layer 6 includes the first particle 61a, for example, the ion conductivity in the thickness direction T of the solid electrolyte layer 6 is improved. Since the solid electrolyte layer 6 includes the second particle 61b, for example, stresses generated inside the solid electrolyte layer 6 are alleviated, and durability is improved. Therefore, according to the solid electrolyte layer 6 of the present embodiment, the performance of the cell 1C is improved.

### Other Embodiments

An electrochemical cell device according to other embodiments will be described.

In the above-described embodiments, the solid oxide fuel cell, the fuel cell stack device, the fuel cell module, and the fuel cell device have been described as examples of the "electrochemical cell", the "electrochemical cell device", the "module", and the "module housing device". However, as other examples, a solid oxide electrolysis cell, an electrolysis cell stack device, an electrolysis module, and an electrolysis device may be used. The electrolytic cell includes a first electrode layer and a second electrode layer, and decomposes water vapor into hydrogen and oxygen or decomposes carbon dioxide into carbon monoxide and oxygen by supplying electric power. Although an oxide ion conductor or a hydrogen ion conductor is shown as an example of the electrolyte material of the electrochemical cell in each of the above embodiments, the electrolyte material may be a hydroxide ion conductor. According to the electrolysis cell, the electrolysis cell stack device, the electrolysis module, and the electrolysis device, performance can be improved.

### EXAMPLES

Samples 1 to 13 simulating the solid electrolyte layer 6 were prepared, and the performance was evaluated.

### Preparation of Samples 1 to 13

Samples 1 to 13 were prepared using electrolyte materials having different particle diameters. As the electrolyte material, two kinds of ZrO₂ materials (YSZ materials) with 8 mole% of Y₂O₃ solid solution were prepared. The two kinds of YSZ materials are a material A having an average grain size of 1.8 µm and a material B having an average grain size of 0.4 µm.

Two kinds of slurries were prepared using the material A, the material B, a solvent, and a dispersant. Specifically, the material A, a solvent, and a dispersant were crushed with a ball mill for 10 hours, so that slurry A was obtained. The material B, the solvent, and the dispersant were crushed with a ball mill for 10 hours, so that slurry B was obtained. The obtained slurry A and slurry B were mixed at various ratios and dried to obtain mixed powders.

The resistance of the solid electrolyte layer 6 was evaluated as the resistance of a single cell prepared by forming the solid electrolyte layer 6 using the mixed powder, the fuel electrode 5, the intermediate layer 7, and the air electrode 8.

The single cell was produced as follows. A laminated sheet was obtained by laminating the sheet for a solid electrolyte layer prepared using the mixed powder described above on the formed sheet for a fuel electrode. The obtained laminated sheet was degreased and then fired at 1500°C in the atmosphere to obtain a laminated sintered body. The slurry for an intermediate layer was printed on the solid electrolyte layer of the obtained laminated sintered body, degreased, and then fired at 1350°C in the atmosphere. Thereafter, the slurry for the air electrode was further printed, degreased, and then fired at 1150°C in the atmosphere to obtain a single cell having the solid electrolyte layer 6 with a different content of the first particles 61a.

### Evaluation of Samples 1 to 13

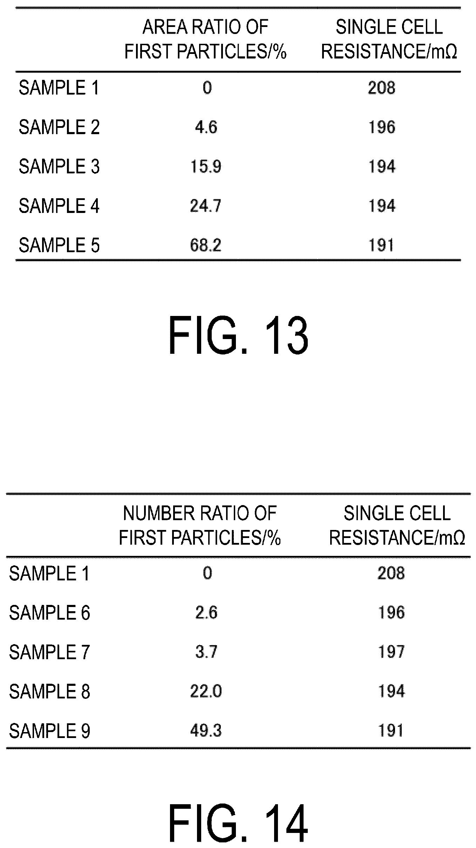

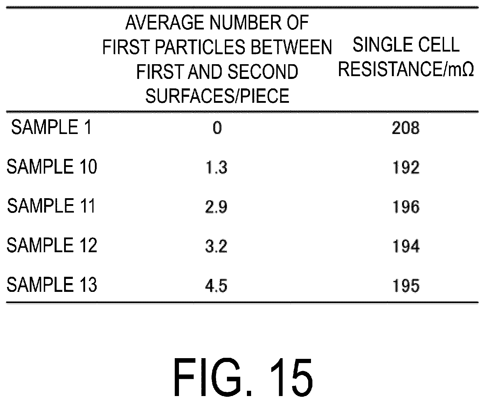

For each of Samples 1 to 13, the area ratio of the first particles 61a included in the solid electrolyte layer 6, the number ratio of the first particles 61a, the average number of the first particles 61a between the first surface 6a and the second surface 6b, and the resistance of the single cell were measured. FIG. 13 is a diagram illustrating evaluation results of Samples 1 to 5. FIG. 14 is a diagram illustrating evaluation results of Samples 1 and 6 to 9. FIG. 15 is a diagram illustrating evaluation results of Samples 1 and 10 to 13. The area ratio of the first particles 61a in the solid electrolyte layer, the number ratio of the first particles 61a, and the average number of the first particles 61a between the first surface and the second surface were evaluated by observing a cross section of the single cell along the stacking direction using scanning electron microscopy (SEM). The resistance is ohmic resistance measured by an AC impedance method.

As illustrated in FIGs. 13 to 15, Samples 2 to 13 including the first particles 61a other than Sample 1 exhibited lower resistance than Sample 1 not including the first particles.

While the present disclosure has been described in detail, the present disclosure is not limited to the aforementioned embodiments, and various changes, improvements, and the like can be made without departing from the gist of the present disclosure.

In one embodiment, (1) a solid electrolyte layer includes a first surface and a second surface opposed to each other in a thickness direction, and a plurality of electrolytic particles containing an oxide, and the plurality of electrolytic particles include: at least one first particle in contact with both the first surface and the second surface; and a second particle: in contact with either one of the first surface and the second surface; in no contact with the other one of the first surface and the second surface.
(2) In the solid electrolyte layer according to (1), the plurality of electrolytic particles may further include a third particle located away from both the first surface and the second surface.
(3) In the solid electrolyte layer according to (1) or (2), an area ratio of the at least one first particle in a cross section intersecting the first surface and the second surface may be 4% or more and 70% or less.
(4) The solid electrolyte layer of any one of (1) to (3) above may include one of the at least one first particle having a diameter larger than an average thickness of the solid electrolyte layer in a cross section intersecting the first surface and the second surface.
(5) The solid electrolyte layer of any one of (1) to (4) above may include one of the at least one first particle having a diameter smaller than an average thickness of the solid electrolyte layer in a cross section intersecting the first surface and the second surface.
(6) The solid electrolyte layer of any one of (1) to (5) above may include the at least one of first particles in a range of a length corresponding to an average thickness t of the solid electrolyte layer on the first surface or the second surface in a cross section intersecting the first surface and the second surface.
(7) The solid electrolyte layer of any one of (1) to (6) above may include the at least one first particle is in a number ratio of 2% or more and 50% or less of the plurality of electrolytic particles.
(8) The solid electrolyte layer of any one of (1) to (7), on average, 1.3 or more and 5 or less of the electrolytic particles may be between the first surface and the second surface.

In one embodiment, (9) an electrochemical cell includes the solid electrolyte layer according to any one of (1) to (8).

In one embodiment, (10) an electrochemical cell device includes a cell stack including the electrochemical cell of (9) above.

In one embodiment, (11) a module includes: the electrochemical cell device according to (10); and a storage container housing the electrochemical cell device.

In one embodiment, (12) a module housing device includes the module according to (11), an auxiliary device for operating the module, and an external case housing the module and the auxiliary device.

Note that the embodiments disclosed herein are exemplary in all respects and not restrictive. The aforementioned embodiments can be embodied in a variety of forms. The above-described embodiments may be omitted, substituted, or modified in various forms without departing from the scope and spirit of the appended claims.

### REFERENCE SIGNS

1, 1A to 1C Cell
2 Support substrate
3 Element portion
4 Interconnector
5 Fuel electrode
6 Solid electrolyte layer
7 Intermediate layer
8 Air electrode
10 Cell stack device
11 Cell stack
12 Fixing member
13 Fixing material
14 Support member
15 Support body
16 Gas tank
17 End current collection member
18 Connecting member
60 Grain boundary
61 Electrolytic particle
100 Module
110 Module housing device

## Claims

1. A solid electrolyte layer comprising:
a first surface and a second surface opposed to each other in a thickness direction, and
a plurality of electrolytic particles containing an oxide, and comprising:
at least one first particle in contact with both the first surface and the second surface; and
a second particle:
in contact with either one of the first surface and the second surface; and
in no contact with the other one of the first surface and the second surface.

2. The solid electrolyte layer according to claim 1, wherein
the plurality of electrolytic particles further comprises a third particle located away from both the first surface and the second surface.

3. The solid electrolyte layer according to claim 1 or 2, wherein
an area ratio of the at least one first particle in a cross section intersecting the first surface and the second surface is 4% or more and 70% or less.

4. The solid electrolyte layer according to any one of claims 1 to 3, wherein a cross section intersecting the first surface and the second surface includes one of the at least one first particle has a diameter larger than an average thickness of the solid electrolyte layer.

5. The solid electrolyte layer according to any one of claims 1 to 4, wherein a cross section intersecting the first surface and the second surface includes one of the at least one first particle has a diameter smaller than an average thickness of the solid electrolyte layer.

6. The solid electrolyte layer according to any one of claims 1 to 5, wherein a cross section intersecting the first surface and the second surface includes the at least one of first particles in a range of a length corresponding to an average thickness t of the solid electrolyte layer on the first surface or the second surface.

7. The solid electrolyte layer according to any one of claims 1 to 6, wherein the at least one first particle is in a number ratio of 2% or more and 50% or less of the plurality of electrolytic particles.

8. The solid electrolyte layer according to any one of claims 1 to 7, wherein
on average, 1.3 or more and 5 or less of the electrolytic particles are between the first surface and the second surface.

9. An electrochemical cell comprising:
the solid electrolyte layer according to any one of claims 1 to 8.

10. An electrochemical cell device comprising:
a cell stack comprising the electrochemical cell of claim 9.

11. A module comprising:
the electrochemical cell device according to claim 10; and
a storage container configured to house the electrochemical cell device.

12. A module housing device comprising:
the module according to claim 11;
an auxiliary device configured to operate the module; and
an external case configured to house the module and the auxiliary device.
